# EUROPEAN PATENT APPLICATION

(11) **EP 2 420 679 A1**
(43) Date of publication of application: **22.02.2012**
(21) Application number: 10173423.4
(22) Date of filing: 19.08.2010
(51) Int. Cl.: F04D 15/00, F04D 27/00, E21B 43/12, E21B 47/00, H02P 7/00

(54) **Method, arrangement and a computer program product for determining correct running direction a fluid flow generating apparatus**

(71) Applicant: ABB Oy, 00380 Helsinki (FI)
(72) Inventor: Saukko, Juha, 00380, Helsinki (FI)
(74) Representative: Tiilikainen, Jarkko Tapio

(57) **Abstract**

The present invention provides a method, arrangement and a computer program product for determining correct running direction a fluid flow generating apparatus (10). In the method a fluid flow generating apparatus (10) is controlled with a frequency converter (20), the features of which are used to determine the correct running direction of the apparatus (10) upon setup thereof. Specifically, a first running sequence is performed by controlling the apparatus (10) with the frequency converter (20), wherein the apparatus is run to a first direction, whereby a first respective indicative value (X) is acquired from the frequency converter (20). Thereafter a second running sequence is performed, wherein the apparatus is run to a second direction reverse to the first direction, whereby a second respective indicative value (Y) is acquired with the frequency converter (20). The values (X, Y) are compared, and based on the comparison the correct running direction is concluded.

## Description

### Field of the invention

The present invention relates to determining the correct running direction of a fluid flow generating apparatus. In particular, the present invention relates to determining the correct running direction of a fan or a centrifugal pump. To be precise the invention relates to the preamble portions of claims 1,11 and 15.

### Background art

Fluid flow generating apparatuses, such as pumps and fans, can typically be run in either direction. However, if the apparatus is run in the wrong direction, i.e. the apparatus has an incorrect direction of rotation, its efficiency is considerably reduced. This is a typical problem with centrifugal pumps that are used in groundwater pumping stations. Because a centrifugal pump can be run in both directions, it is vital to determine the right direction upon setup of the device. Once the pump has been properly set up, it is typically thereafter run until the end of its life span without further changes to its configuration.

Indeed, regardless of their simple construction, centrifugal pumps make a particular case in point. Unfortunately and almost without exception, the running direction has not been marked in the pumps at all or at least clear enough. Furthermore, centrifugal pump housings are typically designed and assembled so that it is very difficult to conclude the correct running direction of the pump just by looking at its mechanical features on the outside without disassembling the pump. This is because the inlet openings are rather made to prevent the pump from taking in harmful particles from the water. Due to the small size of the openings, the spiral inside the pump cannot be seen and it is therefore impossible to conclude the correct running direction of the pump.

Even if it would be possible to conclude the correct direction by visual means, the direction may not necessarily be the correct one because the direction of the incoming water may vary. For example, water may run in from the outer perimeter of the pump and out from the middle section or vice versa.

Accordingly, it has so far been fundamental to determine the correct running direction experimentally. Typically this has been performed by running the pump in different directions and measuring the achieved height of the resulting water column. This obviously requires significant measurement arrangements and can be difficult to arrange in certain applications.

JP 56035064 A discloses a detecting method for determining the direction of rotation of a canned motor pump by locating the two or more search coils or Hall elements in the rotating magnetic field of the motor and detecting the direction of rotation from the vector sum of AC voltage induced in them. In the arrangement according to JP 56035064 A the search coil or Hall element is fixed to the stator with an interval of 90 electric angle. The induced voltage vectors are input to the detection circuit for obtaining the vector sum and the voltage is indicated with the voltmeter. When the motor runs forward, the indication value is unequal to zero and when reverse, the sum is 0. Thus, the direction of rotation can be detected with this indication.

However, while JP 56035064 A discloses a detecting method for determining the direction of rotation of a canned motor pump, the method and respective arrangement require equipping the apparatus with excessive components, such as Hall elements. This is to be avoided with simple apparatuses, such as fans.

### Aim of the invention

The aim of the invention is therefore to mitigate at least some of the problems associated with the state of the art and to provide an improved straight-forward method and arrangement for determining the correct running direction of a fluid flow generating apparatus.

It is a particular aim of the invention to provide an improved method and arrangement for determining the correct running direction of a fan or centrifugal pump.

### Summery

The aim can be achieved with a novel method according to the present invention, which method is founded on the novel concept of controlling the fluid flow generating apparatus with a frequency converter and using the features of the frequency converter to determine the correct running direction of the apparatus upon setup thereof. In the method a first running sequence is performed by controlling the apparatus with a frequency converter, wherein the apparatus is run to a first direction, whereby a first respective indicative value is acquired from the frequency converter. Thereafter a second running sequence is performed, wherein the apparatus is run to a second direction reverse to the first direction, whereby a second respective indicative value is acquired with the frequency converter. The values are compared, and based on the comparison the correct running direction is concluded.

According to one embodiment, a centrifugal pump is run at nominal speed sequentially in opposite directions with a frequency converter and the correct running direction is derived by comparing the respective current values associated with each running order, whereby it is concluded that the direction producing the larger value is the correct one.

More specifically, the method according to the invention is characterized by what is stated in the characterizing portion of claim 1.

On the other hand, the aim of the invention can be achieved with a novel arrangement according to the present invention, which arrangement comprises a frequency converter, which is connectable to the apparatus for control thereof and which is adapted to perform the method according to one of claims 1 to 10.

According to one embodiment, the frequency converter is adapted to run the apparatus to a first direction and to acquire a first respective indicative value from the frequency converter. The frequency converter is thereafter adapted to run the apparatus to a second direction reverse to the first direction and to acquire a second respective indicative value from the frequency converter. The frequency converter is finally adapted to compare the values and to select the direction having the larger indicative value as the default running direction.

More specifically, the arrangement according to the invention is characterized by what is stated in the characterizing portion of claim 11.

According to another aspect of the invention, the aim achieved with a computer program product, which it is adapted to control a frequency converter to perform the steps of claim 1.

### Benefits

Considerable benefits can be achieved with aid of the present invention. Apart from avoiding measuring the height of water columns, the method can be performed by a piece of software embedded to the frequency converter controlling the fluid flow generating apparatus without the need for excessive equipment or components. The method can also be applied on a vast variety of different fluid flow generating apparatus that can be run in both directions without damaging the equipment.

### Brief description of drawings

In the following certain embodiments of the invention are described with greater detail with reference to the accompanying drawings, in which:
Fig. 1 presents a flow diagram of a determining sequence according to one embodiment of the invention, and
Fig. 2 presents a block diagram of an arrangement according to one embodiment of the invention.

### Detailed description of preferred embodiments

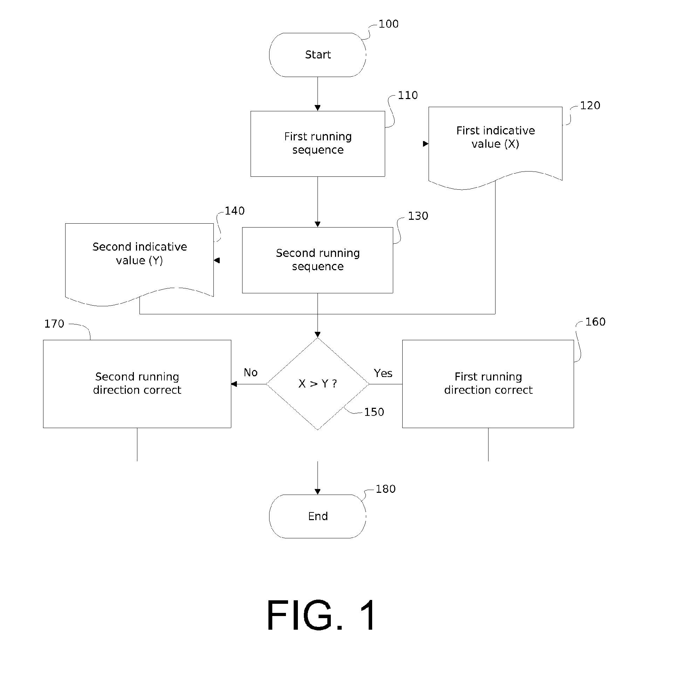

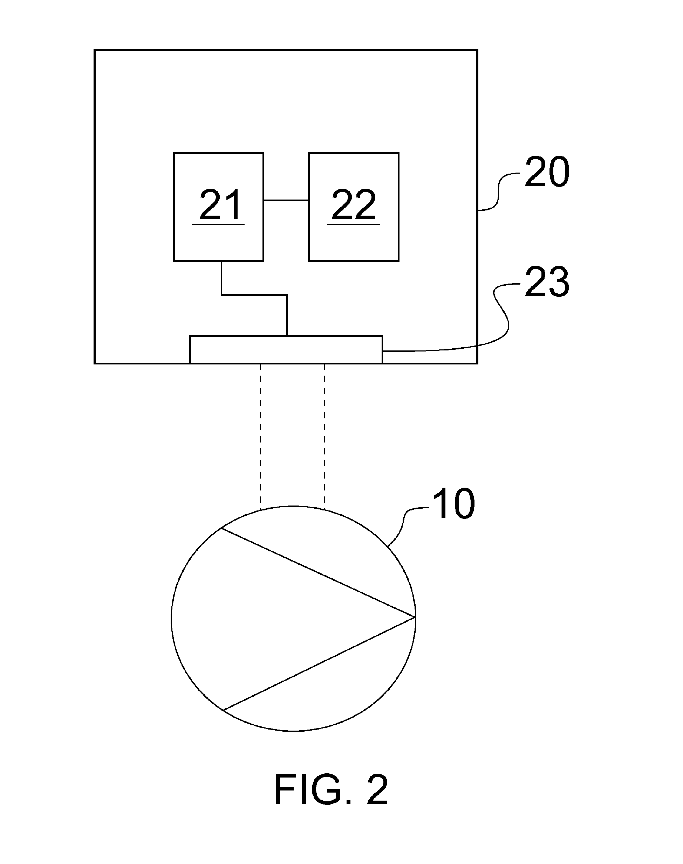

As illustrated in Fig. 1 the method according to one embodiment of the invention comprises two running sequences and one comparison sequence for determining the correct running direction of a fluid flow generating apparatus. While the invention is applicable to a variety of different fluid flow generating apparatuses 10, embodiments are herein described referring to the particular case of a centrifugal pump, which is controlled by a frequency converter 20, as shown in Fig. 2. Other especially suitable applications for the method and arrangement of the invention include other types of pumps as well as fans, blowers and such.

The frequency converter 20 comprises a processor 21 and a memory unit 22 coupled to the processor 21, whereby the converter 20 is adapted to run different programs and to record data relating to the pump 10 (Fig. 2). The frequency converter 20 also comprises an interface 23 between the pump 10 and the processor 21 for gathering information, such as power consumption or rotation speed, from the pump 10 and for controlling the pump 10 by adjusting the power frequency based on the commands of the processor 21. The components and function of a frequency converter is known *per se* and it is to be understood as an entity, but said components are herein broken down for illustrative purposes. In said example, the centrifugal pump 10 is located on the bottom of a well, whereby the frequency converter 20 is preferably located in an enclosure at ground level and connected to the pump 10 via long cables. Controlling a centrifugal pump and other fluid flow generating apparatuses is also known per *se.*

The frequency converter 20 is adapted to perform the method according to the invention. While it is especially advantageous to program the frequency converter 20 to perform the determination sequences, the same inventive concept can be implemented by controlling the apparatus 10 and converter 20 with an external controlling means (not shown), which is programmed to run the determination sequence. Such an external controlling means can, for example, be provided with a computer coupled to the frequency converter 20. It is therefore to be understood that the element, which controls the apparatus 10, is part of the arrangement regardless of whether or not is integral part of the frequency converter. However, according to a preferable embodiment, the program for running the determination sequences is stored into the memory 22 and run by the processor 21 of the frequency converter 20.

Referring back to Fig. 1, in which the method according to said embodiment starts 100 with ensuring that the pump 10 is properly set up, turning the power on and either engaging the determination program on the control software or simply performing the determination manually. During the start sequence 100 the connections of the centrifugal pump are checked and it is ensured that there is a sufficient amount of water in the well etc. The first task of the determination method is to perform a first running sequence 110, in which the frequency converter 20 drives the pump 10 to a first direction for a predetermined period of time at a certain speed. For example the first running sequence 110 can be performed clockwise at the nominal speed of the pump 10 for 30 seconds. The first running direction can be chosen arbitrarily as can the speed and duration for that matter. However, the nominal speed is an especially suitable performance indicator. Also, less than a minute is normally sufficient for performing the running sequence. It is, however, preferable to run the apparatus 10 for over 15 seconds in order to achieve the desired running speed.

Once the desired running speed is achieved, the speed is maintained for a period of time, such as five seconds, wherein a first indicative value X is acquired 120 based on the performance of the apparatus 10 during said period. The indicative value X can be determined in many different ways. According to one embodiment, the indicative value X is the average current of the apparatus 10, which value is established by collecting current measurements with the interface 23, storing them into the memory 22 and calculating the mean value with the processor 21. According to another embodiment, the indicative value X is average torque of the apparatus 10, which value is calculated by the processor 21 based on the measurements of the interface 23. According to yet another embodiment, the indicative value X is average power consumption of the apparatus 10. The indicative value X may also be of another quantity that can be determined with aid of a frequency converter. Once the first indicative value X is acquired, it is stored into the memory 22.

After the first running sequence 110, a second running sequence 130 is performed with the same parameters, but in a running direction opposite to the first running direction. I.e. the pump 10 is run counter-clockwise at nominal speed for 30 seconds. The second running sequence 130 results in a respective second indicative value Y, which is stored 140 into the memory 22. The first and second running sequences may be performed for a dif ferent duration as long as the results, i.e. the indicative values, are comparable.

After both running sequences are performed and two indicative values X, Y are acquired, the values X, Y are compared to each other 150. In the comparison sequence 150, the larger value is determined, upon which the correct running direction can be derived. If the first value X is larger than the second value Y 160, it means that the apparatus 10 consumed more power at nominal speed running in the first direction than in the second direction, for example. Moreover this means that more power was used to pump water. Accordingly the first running direction is correct. Generally speaking, when the apparatus 10 consumes more power or puts out greater torque or runs on higher current in a specific running direction, that direction is the correct one.

If, on the other hand, the first value X is not larger than the second value Y 170, it means that the apparatus 10 consumed more power at nominal speed running in the second direction than in the first direction. Accordingly the second running direction is correct. Once it has been concluded, which running direction is the correct one, the test sequence ends 180. After the determination sequences 100 to 180, the apparatus 10 is set up and there should be no need for recalibration. Also after establishing the correct running direction, the frequency converter 20 is adapted to run the apparatus 10 automatically in said correct direction as a default setting unless otherwise set up.

According to an alternative embodiment, the apparatus 10 is run in the running sequences 110, 130 by controlling a parameter other than speed, wherein the indicative value X,Y may be speed. For example, the apparatus 10 is run clockwise in the first running sequence 110 on a predetermined current or power, which is also used to run the apparatus counter-clockwise in the second running sequence 130. The resulting running speed is thereafter compared 150, and based on the comparison, the correct running direction is concluded to be the direction yielding lower running speed.

The method according to the invention may be performed in conjunction with other methods for determining the correct running direction. According to one embodiment, the method is performed as a precautionary method for ascertaining the result of a traditional visual measurement, which is based on the height of the water column.

**Table 1: List of reference numbers.**

| Number | Part |
|---|---|
| 10 | apparatus |
| 20 | frequency converter |
| 21 | processor |
| 22 | memory |
| 23 | interface |
| 100 | start of determination |
| 110 | first running sequence |
| 120 | acquiring first value (X) |
| 130 | second running sequence |
| 140 | acquiring second value (Y) |
| 150 | comparison sequence |
| 160 | concluding the first running direction is correct |
| 170 | concluding the second running direction is correct |
| 180 | end of determination |
| X | first value |
| Y | second value |

## Claims

1. Method for determining correct running direction of a fluid flow generating apparatus (10), the method comprising the steps of:
- performing a first running sequence (110), wherein running the apparatus (10) to a first direction and acquiring (120) a first indicative value (X),
- performing a second running sequence (130), wherein running the apparatus (10) to a second direction reverse to the first direction and acquiring (140) a second indicative value (Y),
- comparing (150) the values (X, Y), and
- determining the correct running direction based on the comparison (150),
**characterized in** controlling the apparatus with a frequency converter (20) and acquiring the indicative value (X, Y) from the frequency converter (20).

2. Method according to claim 1, wherein first providing a fan or a centrifugal pump as the apparatus (10).

3. Method according to claim 1 or 2, wherein the apparatus (10) is run at a predetermined speed in the running sequences (110, 130).

4. Method according to claim 3, wherein running the apparatus (10) at nominal speed in the running sequences (110, 130).

5. Method according to any preceding claim, wherein based on comparing (150) the values (X, Y), concluding that the direction providing the larger value (X, Y) is the correct one.

6. Method according to any preceding claim, wherein concluding that the first direction is the correct running direction, if the first indicative value (X) is larger than the second indicative value (Y).

7. Method according to any preceding claim, wherein concluding that the second direction is the correct running direction, if the first indicative value (X) is not larger than the second indicative value (Y).

8. Method according to any preceding claim, wherein the indicative value (X, Y) is the current of the apparatus (10).

9. Method according to any preceding claim, wherein the indicative value (X, Y) is the power consumption of the apparatus (10).

10. Method according to any preceding claim, wherein the indicative value (X, Y) is the torque of the apparatus (10).

11. Arrangement for determining the correct running direction of a fluid flow generating (10), the arrangement comprising analysis means for determining the correct running direction of the apparatus (10),
**characterized in that** the analysis means comprises a frequency converter (20)**,** which is connectable to the apparatus (10) for control thereof and which is adapted to perform the method according to one of claims 1 to 10.

12. Arrangement of claim 11, wherein the fluid flow generating apparatus (10) is a fan or a centrifugal pump (10).

13. Arrangement of claim 11 or 12, wherein the frequency converter (20) is adapted:
- to run the apparatus (10) to a first direction and to acquire a first respective indicative value (X) from the frequency converter (20),
- to run the apparatus (10) to a second direction reverse to the first direction and to acquire a second respective indicative value (Y) from the frequency converter (20), and
- to compare the values (X, Y) and to select the direction having the larger indicative value (X, Y) as the default running direction.

14. Arrangement of claim 11, 12 or 13, wherein the frequency converter (20) is adapted to run the apparatus at a predetermined speed, preferably nominal speed.

15. Computer program product, **characterized in that** it is adapted to control a frequency converter (20) to perform the steps of claim 1.
